# EUROPEAN PATENT APPLICATION

(11) **EP 4 588 603 A1**
(43) Date of publication of application: **23.07.2025**
(21) Application number: 24223042.3
(22) Date of filing: 23.12.2024
(51) Int. Cl.: B23K 20/02, B23K 101/14

(54) **METHOD FOR MANUFACTURING MONOLITHIC CHANNELLED DEVICES**

(30) Priority: 27.12.2023 IT 202300028026
(71) Applicant: Microchannel Devices S.r.l., 10121 Torino (IT)
(72) Inventor: Vaiarelli, Alessandro, 10121 Torino (IT); Actis, Carlo, 10121 Torino (IT); Pansoya di Borio, Edoardo, 10121 Torino (IT)
(74) Representative: Fiume, Orazio

(57) **Abstract**

Method for manufacturing a heat exchanger according to the diffusion bonding technique, comprising the following steps in succession (Step 1) preparation of a plurality of etched plates (SL) and (Step 2) packing of the etched plates so as to define a semi-finished product (MF) of the heat exchanger, (Step 3) insertion of the semi-finished product inside a metal capsule (C), (Step 4) insertion of the capsule inside a oven (H), weakly pressurized with inert gas, (Step 5) application of a pressing according to a packing direction (X) by means of at least one piston (P1, P2, P3...Pn) and simultaneous heating of the oven, (Step 6) removal of the capsule.

## Description

### Field of the invention

The present invention relates to the field of manufacturing of monolithic channelled devices by the diffusion bonding method. In particular, monolithic channelled devices include printed circuit heat exchangers and PCR reactors. Furthermore, the present invention also relates to an oven for implementing the method.

### State of the art

Diffusion bonding technology is also named welding by means of diffusion and consists of welding two metal surfaces together by pressing them together at high temperature and high vacuum.

Welding between such surfaces of similar or dissimilar metals occurs due to the inter-diffusion of the atoms of the two surfaces in mutual contact with the consequent union by local plastic deformation.

Generally, the temperature at which this process occurs is in the order of 80%-90% of the melting temperature of the material being welded.

Channelled monolithic devices, hereinafter referred to for simplicity as "channelled devices", are made by overlapping metal plates previously engraved and packed to form a semi-finished product. They are called PCHE from the acronym "Printed Circuit Heat Exchanger" or PCR from the acronym "Printed Circuit Reactor". Subsequently, the packing is subjected to the compression process and simultaneous heating causing the plates to weld together.

This technique is performed at a high vacuum because the materials the semi-finished product is made of require degassing.

A first welding technique of the prior art involves the preparation of an oven under high vacuum, within which a press operates. The press is substantially external to the oven, therefore the mobile equipment of the same moves telescopically through a wall of the oven with a sealed system.

An external casing, which encloses the oven, can be arranged for the purpose of maintaining the vacuum, however, the wall of the external casing is also crossed by the mobile equipment and therefore must be suitable to guarantee sealing.

The mobile equipment is made up of a plurality of pistons integral with each other that push a plate with a certain elasticity for example in CFC from the acronym "Carbon Fiber Composite".

The main limitations of this technology are linked to the difficulty of ensuring a high vacuum which requires a large-sized plant to work heat exchangers or reactors having dimensions much smaller than those of the plant. Another problem arises from the risk of creating nonuniformity in the product obtained, due to a lack of homogeneity in the resistance to compression of the semi-finished product itself. Furthermore, it must be considered that the packing of the plates does not lead to a perfect right prism, while the press planes are almost perfect, therefore, the mutual contact, in itself, leads to an irregular distribution of tensions.

Another technique involves the application of an isostatic pressure on the semi-finished product being processed through a pressurized gas, therefore, the pressure acts uniformly on all surfaces of the semi-finished product, hence the term "isostatic".

The semi-finished product is inserted into a closed capsule and placed under vacuum inside it. The capsule is sealed and inserted into an oven in which it is subjected to high temperature and pressure, by means of a pressurized gas. Therefore, according to this technique, the compression of the plates occurs due to the collapse of the capsule under the pressure established inside the oven.

Subsequently, the capsule is removed, by mechanical machining at least in the useful portions of the semi-finished product, i.e. where external portions of a hydraulic circuits are then associated.

Preferably, the gas used is an inert gas to prevent any combustion or oxidation of the oven components from being triggered at high temperatures.

However, even if a gas containing oxygen were used, this would only attack the capsule without attacking the semi-finished product being processed.

The main limitations of this technology are essentially linked to the oven, which must be able to contain a pressurized gas at high pressures, in the order of 100 bar and temperatures in the order of 1000°C. Evidently, as the size of the oven increases, it becomes increasingly complex to ensure its sealing, also considering the expansions induced by high temperatures.

Furthermore, the capsule may yield under the high pressures generated in the oven, allowing pressurized gas to penetrate inside and equalize the pressure. In this case, the thrust generated by the pressurized gas is lost, resulting in insufficient pressing of the faces being welded.

Another limitation lies in the technique itself, namely the fact that the pressure is isostatic, therefore also acting on the lateral faces of the semi-finished product, namely on the faces perpendicular to the packing direction. This aspect may represent an obstacle to the correct contact between the plates defining the semi-finished product. According to both techniques illustrated here, it may happen that the semi-finished product is subject to structural collapse of some of the more fragile areas. Unless specifically excluded in the detailed description that follows, what is described in this chapter is to be considered as an integral part of the detailed description.

### Summary of the invention

The purpose of the present invention is to indicate a method of manufacturing a channelled device according to the diffusion bonding technique which is more efficient and economical.

In particular, a main purpose is to avoid implementing a high vacuum, while still carrying out mechanical pressing, i.e. by means of a mobile equipment.

The basic idea of the present invention is to enclose the semi-finished product being processed in a capsule and to carry out the pressing by means of a mobile equipment. The atmosphere inside the oven, rather than a high vacuum, is weakly pressurized with inert gas, since the possible presence of oxygen does not impact the manufacturing of the semi-finished product thanks to the presence of the capsule.

Therefore, the capsule plays a completely different role compared to the prior art. In fact, while in the prior art it is intended to collapse on the semi-finished product to press the plates that compose it, according to the present solution it has the sole role of protecting the semi-finished product from oxidation and maintaining the high vacuum where necessary.

Advantageously, the capsule does not collapse on the lateral surfaces of the semi-finished product since the pressure exerted has a predetermined direction rather than being omnidirectional and therefore it is not necessary to remove it on these surfaces, saving time.

Advantageously, the oven does not have to guarantee a high level of sealing, since it is not subject to vacuum or very high pressures. Therefore, the oven can have much larger dimensions than those of the prior art, allowing the processing of larger semi-finished products as well as being easier to manufacture and, consequently, cheaper. According to a preferred aspect of the invention, a vacuum is created in the capsule beforehand, so as not to hinder the pressing carried out by the mobile equipment and to facilitate the degassing of the materials defining the semi-finished product. Preferably, before creating the vacuum, the cavity inside the capsule is appropriately washed with inert gas so as to subject it to a vacuum level lower than that of the prior art.

Preferably, the mobile equipment, unlike the prior art, comprises a plurality of pistons controlled selectively so as to cause a differentiated compression on the semi-finished product being processed.

According to a further preferred aspect of the invention, before creating a vacuum, the capsule is appropriately filled with a fluid having pickling properties for the material defining the semi-finished product.

Preferably, this gas with pickling properties is based on a hydrofluoric or hydrochloric acid or hydrogen or similar. Preferably, after filling with the pickling fluid, the capsule is washed and subsequently a vacuum is created in it.

In any case, creating a vacuum, washing with inert gas and introducing a pickling fluid represent procedures that can be combined in any way with each other and that can be operated independently of each other or in sequence. Advantageously, introducing a pickling fluid promotes the diffusion bonding process.

According to a preferred variant of the invention, the capsule is connected to the external environment by means of a duct made, for example, in communication with a side wall of the capsule, crossing a wall of the oven, so as to facilitate the release of gas in the capsule itself. Even more preferably, the capsule is connected, during the high temperature pressing, with a vacuum source, so as to create/control the vacuum during the same procedure.

The dependent claims describe preferred variants of the invention, forming an integral part of the present description.

### Brief description of the figures

Further objects and advantages of the present invention will be apparent from the following detailed description of an embodiment thereof (and variations thereof) and the accompanying drawings given purely for explanatory and non-limiting purposes, in which:
Fig. 1 shows an example of an oven which is the subject of the present invention;

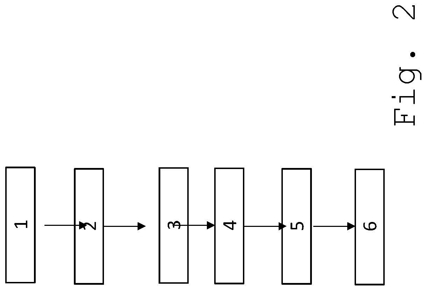

Fig. 2 shows a flow diagram representing an embodiment of the present invention.

The same reference numbers and letters in the figures identify the same elements or components or functions.

It should also be noted that the terms "first", "second", "third", "upper", "lower" and the like may be used herein to distinguish various elements. These terms do not imply a spatial, sequential or hierarchical order for the modified elements unless specifically indicated or inferred from the text.

The elements and features illustrated in the various preferred embodiments, including the drawings, may be combined with each other without departing from the scope of protection of the present application as described below.

### Detailed description

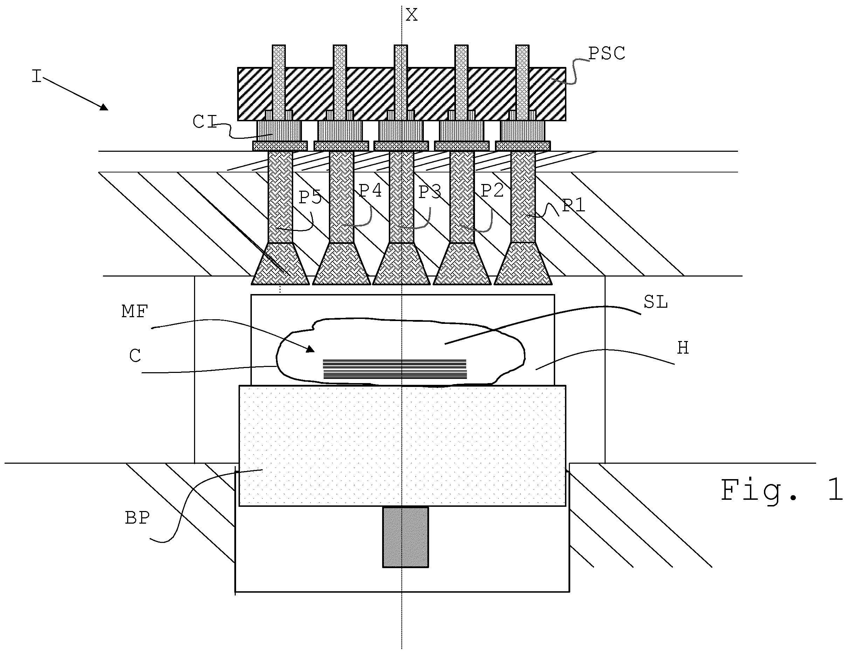

With reference to Fig. 1, an example of a plant I configured to implement the method which is the subject of the present invention is shown.

The plant comprises an oven H in which a bench plate BP is arranged to support the semi-finished product MF being processed and a plurality of pistons P1, P2...Pn which face into the oven so as to exert compression in a direction X perpendicular to the support surface of the bench plate BP. As will be seen later, it is completely irrelevant whether it is the plurality of pistons or the bench plate or both capable of moving to carry out the pressing of the semi-finished product MF.

According to the present invention, the oven, in operating conditions, is arranged to be filled with an inert gas, for example nitrogen, with a mild pressurization, i.e. of the order of 1 - 3 bars.

The pressurization must be sufficient to prevent the entry of ambient air into the oven, since the presence of oxygen can attack the lateral surfaces of the pistons and in general of the moving parts of the oven with a premature deterioration of the same.

According to the present invention, the semi-finished product, as known in the diffusion bonding technique, comprises a plurality of metal plates SL previously engraved and packed.

The semi-finished product MF obtained is inserted inside a metal capsule (C) which is connected to a pump to create a vacuum inside the capsule so that
- the capsule does not oppose the pressing carried out mechanically by means of the at least one piston,
- to compensate for any desorption of gas by the semi-finished product.

The capsule is therefore inserted into the oven and arranged between the bench plate BP and at least one piston and more preferably between the bench plate and the plurality of pistons P1, P2...Pn.

The semi-finished product is then pressed together with the capsule, according to a packing direction X by means of the plurality of pistons P1, P2, P3...Pn and simultaneous heating of the oven.

Advantageously, even if a crack forms in the capsule, the pressing procedure is not affected by the entry of a substantially inert gas mixture into the capsule, as the pressing is carried out through a movement of mechanical parts according to the packing direction.

On the contrary, according to the prior art, if a crack forms in the capsule to be pressed using a gas, this would prevent the pressing required to carry out the diffusion bonding process due to the loss of vacuum in the capsule. At the end of the procedure, the capsule is removed from the oven and the capsule is removed from the semi-finished product.

In summary, the method of the present invention comprises the following steps in succession:
- Step 1: preparation of a plurality of engraved plates SL and
- Step 2: packing of the engraved plates so as to define a semi-finished product MF of the heat exchanger or reactor,
- Step 3: insertion of the semi-finished product inside a closed metal capsule C,
- Step 4: insertion of the capsule inside an oven (H), weakly pressurized with inert gas, and
- Step 5: pressing of the semi-finished product together with the capsule, according to a packing direction X by means of at least one piston and preferably by means of a plurality of pistons P1, P2, P3...Pn and simultaneous heating of the oven with optional creation of a vacuum in the capsule, and/or flushing for washing and pickling of the semi-finished product,
- Step 6: extraction of the capsule from the oven and at least partial removal of the capsule from the semi-finished product.

Preferably, the pistons are loaded so as to perform differentiated pressing on the semi-finished product SM. This fact is particularly advantageous, since the innermost portion of the semi-finished product, containing the incisions of the plates that form the packing, is not able to support the same loads applicable along the edges of the same product.

Therefore, thanks to differentiated pressing, it is possible to avoid the creation of subsidence in the portions of the semi-finished product that are denser with incisions and therefore structurally more delicate. According to a preferred variant of the system of the present invention, the bench plate BP is fixed while said plurality of pistons P1, P2, P3...Pn is mobile to perform the pressing. According to another variant of the system, the bench plate is moved and the plurality of pistons is kept fixed, alternatively both, the bench plate BP and the plurality of pistons P1, P2, P3...Pn are movable to perform the pressing.

In relation to the solution in which the plurality of pistons is mobile, then a variant is possible in which each piston is operated independently with respect to the others of the plurality of pistons and a variant in which the plurality of pistons is supported by a common support plate PSC and in which each piston is connected to the common support plate PSC by means of an interface CI having a predetermined rigidity so as to achieve said differentiated pressing. The interface can be achieved for example by means of a cup spring and in particular a cup spring capable of maintaining constant the thrust exerted by the relative piston in a predetermined range of pressing movements of the common support plate PSC.

Alternatively, the common support plate is fixed and the bench plate is moved to achieve said pressing, however, even in this case the differentiated pressing is obtained by means of the interface CI calibrated for each piston so as to achieve the differentiated pressing.

Preferably, the plurality of pistons is arranged as a rectangular matrix, configured to exert a relatively greater force on the perimeter area of the semi-finished product and a relatively lesser force in the innermost part of the semi-finished product.

Preferably, the CI interface is calibratable so that the system can be adapted to different semi-finished products of different shapes and sizes.

Since the gas pressure inside the oven is weakly positive, i.e., in the order of a few bars, then it is possible to keep the capsule connected to a vacuum pump even during the pressing process.

Such a connection with the vacuum pump is difficult to implement in a system in which the pressing is performed by isostatic pressure, as foreseen by the prior art. In fact, the same connection would be subject to the same high pressure to which the capsule is subjected with the high risk of cracks forming between the connection and the capsule.

According to a preferred aspect of the method of the present invention, after the insertion of the semi-finished product inside the metal capsule C, but before the creation of a vacuum in the capsule, the capsule is washed with inert gas. This is very advantageous, because it drastically reduces the presence of oxygen in the capsule and allows a mild vacuum to be created, i.e. between 10⁻¹ and 10⁻³ mbar.

The capsule inserted in the oven can be defined as closed even when operationally connected to a vacuum pump, as it does not allow the entry of material inside it during the diffusion bonding process. Obviously, any washing with inert gas and/or pickling is carried out before the diffusion bonding process.

Implementation variants to the non-limiting example described are possible, without however departing from the scope of protection of the present invention, including all the equivalent embodiments for a technician in the field, to the content of the claims.

From the description reported above, the technician in the field is able to realize the object of the invention without introducing further construction details.

## Claims

1. Method for manufacturing a monolithic channelled device according to the *diffusion bonding* technique, comprising the following steps in succession:
- (Step 1) preparation of a plurality of etched plates (SL) and
- (Step 2) packing of the etched plates in order to define a semi-finished product (MF) of the monolithic channelled device,
- (Step 3) inserting the semi-finished product inside a metal capsule (C), closed,
- (Step 4) insertion of the capsule inside an oven (H), weakly pressurized with inert gas and
- (Step 6) pressing of the semi-finished product together with the capsule, according to a packing direction (X) using at least one piston (P1, P2, P3...Pn) and simultaneous heating of the oven,
- (Step 6) extraction of the capsule from the oven and removing at least partially the capsule.

2. Method according to claim 1, in which said pressing (Step 5) is carried out by means of a plurality of pistons (P1, P2, P3...Pn) loaded so as to achieve a differentiated pressing on the semi-finished product (SM).

3. Method according to claim 2, wherein the semi-finished product (SM) is pressed on a first side by said plurality of pistons (P1, P2, P3...Pn) and on a second side, opposite to the first one, by means of a single bench plate (BP).

4. Method according to claim 3, wherein said bench plate (BP) is kept fixed while said plurality of pistons (P1, P2, P3...Pn) is moved to carry out said pressing or wherein said bench plate is moved and said plurality of pistons is kept fixed or wherein both said bench plate (BP) and said plurality of pistons (P1, P2, P3...Pn) are moved to carry out said pressing.

5. A method according to claim 4, wherein when said plurality of pistons is moved, then each piston is actuated autonomously with respect to the others of the plurality of pistons.

6. The method according to claim 4, wherein said plurality of pistons is supported by a common support plate (PSC) and wherein each piston is connected to said common support plate (PSC) via an interface (CI) having a predetermined stiffness differentiated between the pistons in order to achieve said differentiated pressing.

7. The method of claim 6, wherein said common support plate is fixed and said bench plate is moved to effect said pressing.

8. Method according to any of the previous claims, wherein after the insertion of the semi-finished product into the metal capsule, a washing of an interior of the metal capsule with inert gas and/or washing with a fluid having pickling properties is carried out.

9. Method according to any of the previous claims, wherein the vacuum creation procedure is carried out before or during the pressing procedure (Step 5) or when the method involves washing with inert gas and/or washing with a fluid having pickling properties according to claim 8, the vacuum creation procedure is carried out immediately before or during the pressing procedure (Step 5).

10. Plant for the manufacture of a monolithic channelled device according to the *diffusion bonding* technique, comprising an oven (H) inside which there is a plurality of pistons (P1, P2, P3...Pn) loaded in such a way as to create a differentiated pressing on a closed depressurized capsule containing a semi-finished product (SM) subject of manufacture.

11. System according to claim 10, wherein the oven is arranged to be pressurized at a pressure lower than 10 bar.
